# EUROPEAN PATENT APPLICATION

(11) **EP 2 189 864 A1**
(43) Date of publication of application: **26.05.2010**
(21) Application number: 09166411.0
(22) Date of filing: 24.07.2009
(51) Int. Cl.: G05B 23/02

(54) **System and method for monitoring the health of a subject system**

(30) Priority: 30.09.2008 US 242494
(71) Applicant: Honeywell International Inc., Morristown, NJ 07962 (US)
(72) Inventor: Magnuson, Randy, Morristown, NJ 07962-2245 (US); Crumpton, Kathleen, Morristown, NJ 07962-2245 (US); Miller, Dave, Morristown, NJ 07962-2245 (US); Kolbet, David, Morristown, NJ 07962-2245 (US)
(74) Representative: Buckley, Guy Julian

(57) **Abstract**

A health monitoring system includes a first monitoring unit configured to monitor health status indicators of a subject system; and a second monitoring unit configured to monitor the health status indicators of the subject system upon receiving a transfer signal.

## Description

### STATEMENT REGARDING FEDERALLY SPONSORED RESEARCH OR DEVELOPMENT

This invention was made with Government support under Contract Number W56HZV-05-C-0724 awarded by the US Army. The Government has certain rights in this invention.

### TECHNICAL FIELD

The present invention generally relates to systems for monitoring the health of an electronic or mechanical system, and more particularly relates to systems that monitor the health of a remote system.

### BACKGROUND

Many types of organizations and groups use complex electronic and mechanical systems to conduct their operations and missions. The current operation or "health" status of such systems can be an important characteristic to evaluate the system and allocate resources. Often, however, these systems have limited or no computer resources available to monitor themselves and/or to report their status. As such, designers are faced with either accepting reduced self-monitoring capability, or using an off-board system to monitor from a remote location. The latter approach, of course, typically requires placement of the off-board monitoring system proximate to the system to be monitored. Moreover, some situations demand that the monitored system and/or the monitoring system be mobile, thereby resulting in transitory remote monitoring and even more complicated considerations. In some cases, these issues may cause gaps in the monitoring coverage and/or reduced function.

Accordingly, it is desirable to provide improved health monitoring systems for monitoring the health of subject systems more effectively. Additionally, it is also desirable to provide a monitoring system for a subject system in a remote location, including situations in which the monitoring system and subject system are moving relative to each other. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a health monitoring system includes a first monitoring unit configured to monitor health status indicators of a subject system; and a second monitoring unit configured to monitor the health status indicators of the subject system upon receiving a transfer signal.

In accordance with another exemplary embodiment, a method for monitoring the health status of a subject system includes monitoring health status indicators from the subject system with a first monitoring unit; generating a first metric that indicates the monitoring suitability of the first monitoring unit; generating a second metric that indicates the monitoring suitability of a second monitoring unit; and transferring monitoring responsibility to the second monitoring unit based on the first and second metrics.

In accordance with yet another exemplary embodiment, a health monitoring system includes a first monitoring unit having a first processor, the first processor having a first monitoring module configured to monitor health status indictors of a subject system, and a first metric module configured to generate a first metric of the first monitoring unit relative to the subject system, the first metric representing the suitability of the first monitoring unit to monitor the subject system. The system includes a second monitoring unit having a second processor, the second processor having a second monitoring module configured to monitor the health status indictors upon receipt of a transfer signal, and a second metric module configured to generate a second metric of the second monitoring unit relative to the subject system indicating the suitability of the second monitoring unit to monitor the subject system; a transfer module configured to evaluate the first and second metrics and to generate the transfer signal; and a packaging module configured to package historical health status indicator data and supply the historical health status indicator data to the second monitoring unit upon receipt of the transfer signal.

### BRIEF DESCRIPTION OF THE DRAWINGS

The present invention will hereinafter be described in conjunction with the following drawing figures, wherein like numerals denote like elements, and

FIG. 1 is a block diagram illustrating a monitoring system in accordance with an exemplary embodiment; and

FIG. 2 is a block diagram of one of the monitoring units of the monitoring system of FIG. 1.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Broadly exemplary embodiments discussed herein provide a health monitoring system for monitoring the health status of a subject system for a client system. More particularly, the health monitoring system includes a number of units that pass responsibility for monitoring the subject system from one unit to the next. This provides seamless monitoring for the client systems at a remote location. The health monitoring system may find beneficial use in many applications and industries, including military applications in which an unattended ground system is successively monitored by vehicles passing by, commercial applications in which trucks are monitored as they pass by fixed monitoring stations, and industrial applications in which monitoring equipment is brought from one site to another to gather system health information.

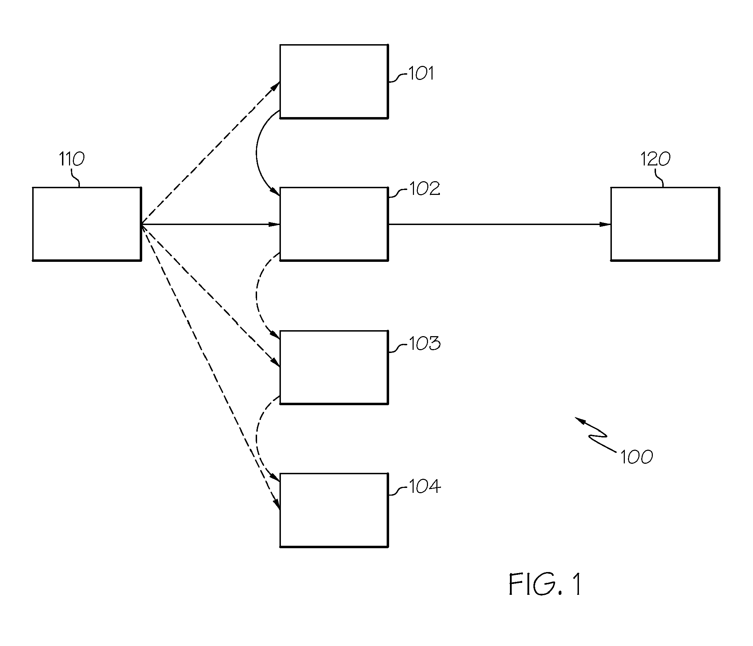

FIG. 1 is a block diagram illustrating a monitoring system 100 in accordance with an exemplary embodiment. As shown in the depicted exemplary embodiment, the monitoring system 100 monitors health status indicators of a subject system 110 and provides a health status to a client system 120.

The subject system 110 typically includes multiple units. In one embodiment, the subject system 110 is an unattended ground system although other systems could be equivalently monitored. Although the subject system 110 can have complex electronic and/or mechanical functions or missions, the units of the subject system 110 may have generally relatively simple capabilities and resources to monitor themselves and/or report their status to the client system 120. Often, the units of the subject system 110 may also have a limited transmission range from a remote location. In situations such as this, mobile support systems passing nearby can provide the monitoring system 100. As client systems 120 need status about the subject system 110, they would acquire that status from whichever monitoring system 100 is currently providing monitoring for it. As such, it is advantageous to monitor the subject system 110 with a separate monitoring system 100.

Although the health status of the subject system 110 is referenced herein, any aspect of the subject system 110 can be monitored. For example, it could also be used for various data collection activities such as periodic production or operational data sampling for quality control purposes as the product passes by a test station. In one exemplary embodiment, the health status of the subject system 110 includes an indication of how well the subject system 110 is operating, including a gauge of the reliability and effectiveness of subject system resources such as data, programs, hardware, level of consumables, etc. In one embodiment, the health status can be based on Built-In Test Equipment (BITE) indicators. In other cases, the health status may come from attached sensor devices, embedded analysis software routines, or even other monitoring systems 100.

As mentioned above, the monitoring system 100 receives the health status indicators from the subject system 110, evaluates the health status, and supplies the health status to the client system. 120 The monitoring system 100 generally includes a number of units 101-104. As will be discussed in greater detail below, a single unit (e.g., unit 102) is typically responsible for monitoring the subject system 110 at any given time. After a period of time, the monitoring unit (e.g., unit 102) will pass off monitoring responsibility to a subsequent unit (e.g., unit 103). This can be, for example, as the monitoring unit passes out of the transmission range of the subject system 110. In the exemplary depiction of FIG. 1, unit 102 is currently monitoring the subject system 110. Unit 101 previously monitored the subject system 110, and transferred responsibility to unit 102. Unit 102 may subsequently transfer monitoring responsibility to unit 103, which may eventually transfer responsibility to unit 104. This monitoring system 100 may be particularly effective when the monitoring system 100 and subject system 110 are moving relative to each other. For example, a mobile monitoring system 100 may move past the subject system 110. In one exemplary embodiment, the monitoring system 100 can be a line of vehicles, each with a unit 101-104 that transfers monitoring responsibility from unit (e.g., unit 101) to unit (e.g., 102) as the vehicles pass by the subject system 110. Because of the relatively limited transmission capabilities of the units of the subject system 110, some individual units 101-104 may be in a better position to monitor the subject system 110 than others, which is discussed in further detail below.

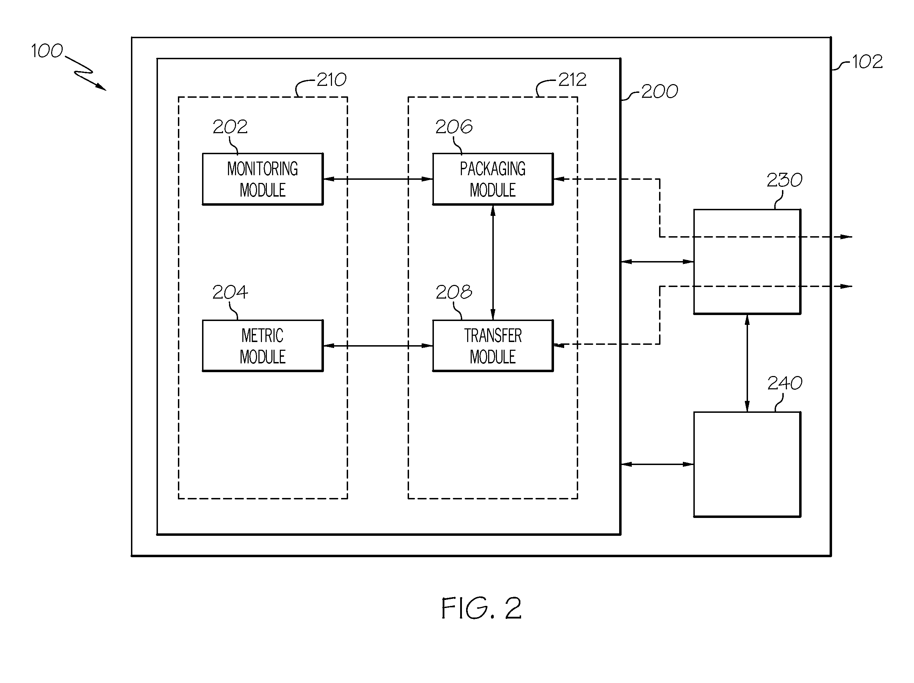

FIG. 2 is an exemplary block diagram of one of the monitoring units 101-104 of the monitoring system 100 of FIG. 1. Although FIG. 2 can represent any of the monitoring units 101-104, it will reference monitoring unit 102 as an illustration.

The monitoring unit 102 includes a processor 200, an I/O component 230 that moves data in and out of the processor 200, and memory 240 that stores any data for use by the processor 200 and/or any other part of the system 100. The processor 200 is described in the general context of computer-executable instructions, such as program modules 202, 204, 206, 208 being executed by a computer. Generally, program modules 202, 204, 206, 208 include routines, programs, objects, components, data structures, etc., that perform particular tasks or implement particular abstract data types.

In the depicted exemplary embodiment, the modules 202, 204, 206, 208 are separated into first and second partitions 210, 212. As will be discussed in greater detail below with reference to the individual modules 202, 204, 206, 208, the first partition 210 is generally associated with the individual unit 102, while the second partition 212 is generally associated with the overall system 100, for example, as a collaborative, distributed system that resides on a collection of monitoring units 101-104. In a further embodiment, the second partition 212 may be omitted, and its function accomplished by another unit or controller of the monitoring system 100.

The modules 202, 204, 206, 208 include a monitoring module 202 and a metric module 204 in the first partition 210 and a packaging module 206 and a transfer module 208 in the second partition 212. Although the modules 202, 204, 206, 208 are discussed and depicted individually, they may readily be integrated with one another or divided into additional sub-modules. As noted above, the packaging module 206 and transfer module 208 may be distributed across many units 101-104. The units 101-104 may be coupled together with, for example, a virtual backplane. The virtual backplane can include a highspeed data bus or wireless data bus that enables all the data of the monitoring system 100 to be available to each of the monitoring units 101-104, regardless of the origin or physical location of the data. The virtual backplane 214 can be a deterministic wireless virtual backplane.

As mentioned above, when the monitoring unit 102 monitors the subject system 110 (FIG. 1), the monitoring module 202 monitors the health status indicators and determines a health status based on the indicators. The monitoring module 202 then provides this health status to the client system 120.

The metric module 204 determines and maintains a metric for the unit 102 relative to the subject system 110 (FIG. 1). The metric is a measure of the suitability of the particular unit 102 to monitor the subject system 110. In one embodiment, the metric is referred to as a "quality of service" metric. The metric can be based on any suitable characteristic, including for example, distance from the subject system 110, strength of signal from the subject system 110, the rate of change of the distance between the unit 102 and the subject system 110, duration of monitoring of the subject system 110, unit availability, unit network loading speed and quality, a combination of these characteristics, or any other characteristic deemed appropriate by the client system 120 or monitoring system 100. This suitability metric concept is similar in nature to that found in many network routing schemes. However, in these embodiments it may be applied to select which monitoring system 100 is best suited for the task. This may involve determining signal quality, as well as a variety of other possible metrics. In some embodiments, the metric utilized by the monitoring system 100 can be flexible.

The other units 101, 103, 104 will similarly maintain individual metrics. These metrics, along with the metric for unit 102, are provided to the transfer module 208, which as noted above, can be a module 208 distributed across the system 100. The transfer module 208 evaluates the metrics and determines which unit 101-104 is most suitable for monitoring the subject system 110. In accordance with one exemplary embodiment, the current monitoring unit 102 will maintain responsibility for monitoring the subject system 110 until the metric for that unit 102 falls below a predetermined level. At that point, the transfer module 208 will evaluate the metrics and determine the unit 101, 103, 104 that should assume monitoring responsibility. Typically, this will be the unit 101, 103, 104 with the highest metric. In the exemplary embodiment depicted by FIG. 1, monitoring responsibility is transferred from unit 102 to unit 103.

When the transfer module 208 determines that a transfer in monitoring responsibility is desired, it signals the packaging module 206. The packaging module 206 packages the appropriate data from the monitoring module 202, and sends the packaged data to the monitoring module 202 for the next unit (e.g., unit 103). The packaged health data represents the current health state and sufficient historical information of the monitored system which is necessary to establish a baseline to interpret follow-on health data received by the new monitoring system. The next unit (e.g., unit 103) similarly receives an indication that it will be assuming monitoring responsibility, receives the packaged data from the previous unit 102, and begins monitoring with the packaged data in its own monitoring module. The unit 103 may now draw conclusions about the health status from its own monitored data and the packaged data from the previous units (e.g., units 101, 102). In one embodiment, the packaging module 206 is omitted and the transfer module 208 directly signals the subsequent unit 103 to begin monitoring without passing along packaged historical data. In another embodiment, more than one monitoring unit 101-104 may monitor the subject system 110 at the same time to provide redundancy for the monitoring system 100.

As such, the system 100 maintains continuity of the monitoring process without interruption as the individual units 101-104 trade monitoring responsibility with one another. To the client system 120, this process typically appears seamless. In one embodiment, the client system 120 receives the health status of the subject system 110 without receiving notification of which individual unit 101-104 of the monitoring system 100 is collecting and evaluating the health status indicators. In effect, the monitoring system 100 in an exemplary embodiment separates the subject system 110 from the monitoring system 100, and the monitoring system 100 may provide continuous monitoring coverage during mobile operations. This reduces the amount of computer resources that the subject system 110 must allocate to health monitoring and reporting, and/or increases the amount of health status information available to the client system 120.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A health monitoring system (100), comprising:
a first monitoring unit (102) configured to monitor health status indicators of a subject system (110); and
a second monitoring unit (103) configured to monitor the health status indicators of the subject system (110) upon receiving a transfer signal.

2. The health monitoring system (100) of claim 1, wherein the first monitoring unit (102) comprises
a first processor (200) comprising a first monitoring module (202) configured to monitor the health status indictors.

3. The health monitoring system (100) of claim 2, wherein the first processor (200) further comprises a first metric module (204) configured to generate a first metric of the first monitoring unit (102) relative to the subject system (110).

4. The health monitoring system (100) of claim 3, wherein the first metric is a measure of the suitability of the first monitoring unit (102) to monitor the subject system (110).

5. The health monitoring system (100) of claim 4, wherein the second monitoring unit (103) comprises a second processor comprising a second monitoring module configured to monitor the health status indictors when the second monitoring unit is monitoring the subject system (110), the second processor further comprising a second metric module configured to generate a second metric of the second monitoring unit (103) relative to the subject system (110) indicating the suitability of the second monitoring unit (103) to monitor the subject system (110).

6. The health monitoring system (100) of claim 5, further comprising a transfer module (208) configured to evaluate the first and second metrics and to generate the transfer signal.

7. The health monitoring system (100) of claim 6, wherein the transfer module (208) is distributed across the first ands second monitoring units (102, 103).

8. The health monitoring system (100) of claim 6, wherein the transfer module (208) sends the transfer signal if the first metric falls below the second metric.

9. The health monitoring system (100) of claim 6, further comprising a packaging module (206) configured to package historical health status indicator data and supply the historical health status indicator data to the second monitoring unit (102) upon receipt of the transfer signal.

10. The health monitoring system (100) of claim 9, wherein the packaging module (206) is distributed across the first ands second monitoring units (102, 103).
